# EUROPÄISCHE PATENTSCHRIFT

(11) **EP 2 107 979 B1**
(45) Veröffentlichungstag und Bekanntmachung des Hinweises auf die Patenterteilung: **06.03.2013**
(21) Anmeldenummer: 07822075.3
(22) Anmeldetag: 31.10.2007
(51) Int. Cl.: B60S 1/34

(54) **WISCHARM**
WIPER ARM
BRAS D'ESSUIE-GLACE

(30) Priorität: 28.12.2006 DE 102006061672
(43) Veröffentlichungstag der Anmeldung: 14.10.2009
(73) Patentinhaber: Robert Bosch GmbH, 70442 Stuttgart (DE)
(72) Erfinder: MAYER, Stephan, 77855 Achern (DE); SCHMIDT, Andreas, 76133 Karlsruhe (DE)
(86) Internationale Anmeldenummer: PCT/EP2007/061727
(87) Internationale Veröffentlichungsnummer: WO 2008/080668

(56) Entgegenhaltungen:
- EP-A- 1 167 136
- DE-A1- 10 010 174
- FR-A- 2 724 897
- US-A- 3 427 676

## Beschreibung

### STAND DER TECHNIK

Die Erfindung betrifft einen Wischarm einer Scheibenwischvorrichtung mit einem Befestigungsteil.

Nach dem eine Entwicklung von Gussbefestigungsteilen hin zu Blechbefestigungsteilen stattgefunden hat, hat man im Zuge dieser Entwicklung auch eine eine Feder aufnehmende Federeinhängung aus Blech bei den Blechbefestigungsteilen vorgesehen. Bei der aus Blech hergestellten Federeinhängung kann es jedoch vorkommen, dass sich die Feder im Laufe der Zeit in das Blech der Federeinhängung eingräbt. Daraus resultiert ein Verlust der Auflagekraft des Wischarms, da die Federlänge durch die in das Blech eingegrabene Feder kürzer wird. Ausserdem führen Riefen und Grate, die durch die Herstellung der Federeinhängung verursacht werden, an der Oberfläche der Federeinhängung zu einer unerwünschten Geräuschentwicklung während des Betriebes des Wischarms .

Die Offenlegungsschrift EP 1 167 136 A2 zeigt ein Wischarmbefestigungsteil umfassend Seitenwände. Die Seitenwände weisen umgebogene Abschnitt auf, welche eine Nut umfassen, durch welche ein Bolzen gesteckt werden kann. An dem Bolzen kann dann eine Feder befestigt werden.

Die Patentschrift US 3,427,676 zeigt eine Druckfederanordnung für einen Wischarm.

Die Offenlegungsschrift FR 2 724 897 zeigt eine Federeinhängung in einem Gelenkteil eines Wischarms.

Die Offenlegungsschrift DE 100 10 174 A1 zeigt ein Gußbefestigungsteil für einen Wischerarm.

### OFFENBARUNG DER ERFINDUNG

Die Erfindung hat deshalb die Aufgabe, einen Wischarm der eingangs genannten Art dahingehend zu verbessern, dass zukünftig auf die aus Blech gefertigte Federeinhängung verzichtet werden kann.

Die Erfindung löst die gestellte Aufgabe mit einem Wischarm mit dem Merkmalen des Anspruchs 1.

Mindestens eine der Laschen kann zum Inneren des Blechbefestigungsteiles hin umgebogen sein. Dadurch reduziert sich die Länge des Bolzens. Je kürzer die Länge des Bolzens ist, umso geringer ist auch seine Durchbiegung, die infolge der Federkraft auftreten kann. Da die Durchbiegung des Bolzens die Auflagekraft des Wischarms reduziert, gewährleistet ein möglichst kurzer Bolzen eine hohe Auflagekraft. Ferner ist der Bolzen durch die mindestens eine umgebogene Lasche von außen nicht sichtbar. Ff

In einer bevorzugten Ausführungsform kann die eine Lasche ein Durchgangsloch und die andere Lasche eine Ü-förmige oder L-förmige Ausnehmung aufweisen. Die U-förmige oder L-förmige Ausnehmung ermöglicht eine rasche Montage des Bolzens. Außerdem gibt sie dem Bolzen einen sicheren Halt während des Betriebes.

Diese Vorteile kommen noch besser zum Tragen, wenn beide Laschen eine U-förmige Ausnehmung aufweisen.

Erfindungsgemäß ist der in den U-förmigen Ausnehmungen angeordnete Bolzen geklemmt. Somit wird der Halt des Bolzens zusätzlich gesichert. Außerdem vermeidet die Klemmung des Bolzens ein unerwünschtes Verdrehen des Bolzens. Da durch das Verdrehen des Bolzens im Betrieb störende Quietschgeräusche hervorgerufen werden können, werden diese durch die Klemmung vermieden.

Um das Verdrehen des Bolzens zuverlässig zu verhindern, kann der Bolzen mit einer rauen Oberfläche versehen sein. Vorzugsweise kann die Oberfläche Riffelungen und/oder Rändelungen aufweisen.

In einer bevorzugten Ausführungsform kann der Bolzen einen Kopf aufweisen. Folglich kann der Bolzen durch das in einer der Laschen vorgesehene Durchgangsloch gesteckt werden, wobei der Kopf ein Durchrutschen des Bolzens durch das Durchgangsloch verhindert.

Sinnvollerweise weisen die Laschen im Anbindungsbereich, in dem sie am Blechbefestigungsteil angebunden sind, eine möglichst hohe Breite auf. Dadurch wird vermieden, dass die zum Inneren des Blechbefestigungsteiles hin umgebogenen Laschen durch die Federkraft aufgebogen werden können. Um Material zu sparen, kann die Breite der Laschen zu ihrem freien Ende hin abnehmen.

In der Praxis hat der Bolzen mit einem Durchmesser von 3 Millimetern gute Ergebnisse bezüglich der Durchbiegung gezeigt. Außerdem weist der Bolzen bei einem Durchmesser von 3 Millimetern einen relativ geringen Umfang auf, so dass er bei einer eventuellen Rotationsbewegung keine störenden Quietschgeräusche verursacht.

Um die Gefahr eines Verschleißes des Bolzens zu reduzieren, kann der Bolzen gehärtet sein.

Die Erfindung betrifft auch eine Scheibenwischvorrichtung, insbesondere für ein Kraftfahrzeug, welches erfindungsgemäß den Wischarm nach einem der Ansprüche 1 bis 10 aufweist.

Außerdem betrifft die Erfindung ein Verfahren zur Herstellung des Blechbefestigungsteiles des Wischarms nach einem der Ansprüche 1 bis 10, das durch folgende Schritte gekennzeichnet ist:
- Ausstanzen des Blechbefestigungsteiles zusammen mit den Laschen und dem Durchgangsloch und/oder den Ausnehmungen,
- Ziehen des Randes,
- Montieren des Bolzens in das Blechbefestigungsteil und Umbiegen der Laschen oder
- Umbiegen der Laschen und Montieren des Bolzens.

### KURZE BESCHREIBUNG DER ZEICHNUNGEN

Nachfolgend werden verschiedene Ausführungsbeispiele des erfindungsgemäßen Wischarms anhand der beiliegenden Zeichnungen näher erläutert.

Im Einzelnen zeigen:
- Fig. 1: einen Längsschnitt durch einen Wischarm;
- Fig. 2: eine Vorderansicht auf eine erste Ausführungsform eines Befestigungsteiles;
- Fig. 3: eine perspektivische Ansicht von unten auf das Befestigungsteil aus Fig. 2;
- Fig. 4: eine weitere perspektivische Ansicht von unten auf das Befestigungsteil aus Fig. 2;
- Fig. 5: eine perspektivische Ansicht von unten auf eine zweite Ausführungsform des Befestigungsteiles.

### AUSFÜHRUNGSFORMEN DER ERFINDUNG

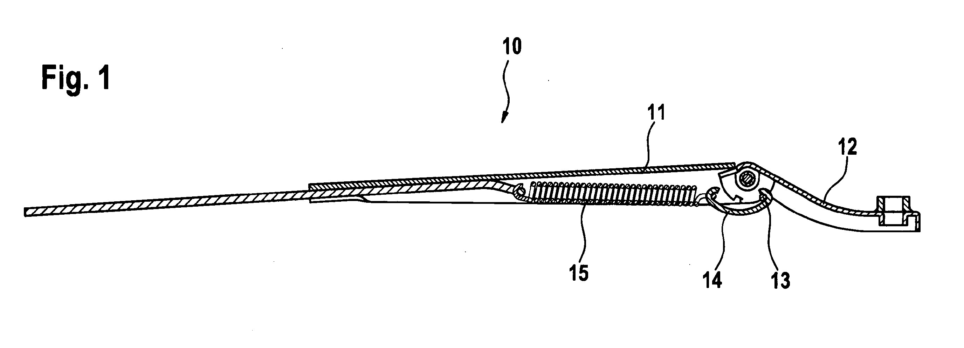

Fig. 1 zeigt einen Wischarm 10 mit einem Gelenkteil 11 und einem Befestigungsteil 12. Das Gelenkteil 11 ist an dem Befestigungsteil 12 angelenkt, so dass ein hier nicht näher dargestelltes Wischblatt an dem Wischarm 10 verschwenkbar angeordnet ist. Auf diese Weise kann das Wischblatt von einer Fahrzeugscheibe weggeklappt und an die Fahrzeugscheibe angeklappt werden.

An einem Bolzen 13 ist ein C-Bügel 14 eingehängt, in den eine Feder 15 eingehängt ist, die wiederum ebenfalls am Gelenkteil 11 eingehängt ist.

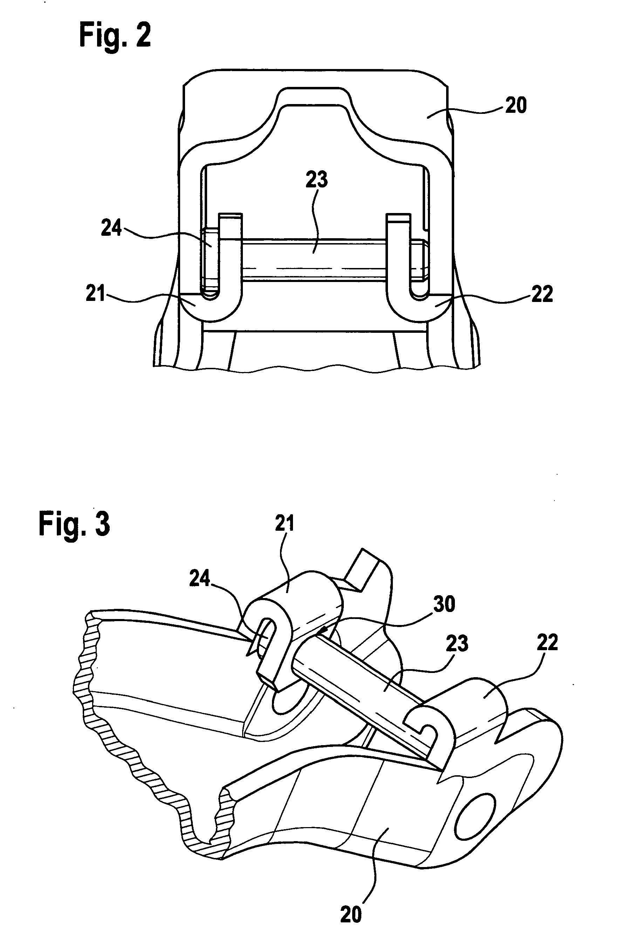

Fig. 2 zeigt ein Befestigungsteil 20 mit zwei Laschen 21 und 22 und einem Bolzen 23. Die Laschen 21 und 22 sind zum Inneren des Befestigungsteil 20 hin umgebogen. Somit weist der Bolzen 23 eine relativ kurze Länge auf. Durch die relativ kurze Länge des Bolzens 23 wird die Durchbiegung reduziert und folglich eine maximale Auflagekraft des Wischarms 10 sichergestellt.

Die Lasche 21 weist ein Durchgangsloch 30 auf (siehe Fig. 3), durch das der Bolzen 23 hindurchgesteckt ist. Der Bolzen ist mit einem Kopf 24 versehen(siehe auch Fig. 2), der verhindert, dass der Bolzen 23 durch das Durchgangsloch 30 hindurch rutschen kann.

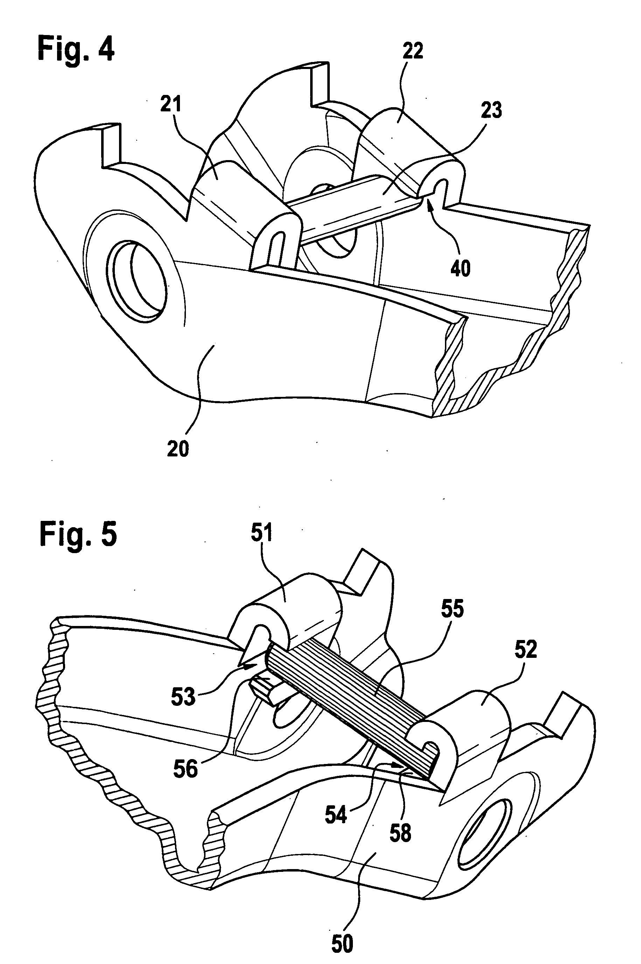

Die Lasche 22 weist eine L-förmige Ausnehmung 40 auf (siehe Fig. 4), in welche der Bolzen 23 eingehängt ist. Die hier nicht gezeigte Feder drückt den Bolzen 23 in die L-förmige Ausnehmung 40, so dass der Bolzen 23 im Betrieb einen sicheren Halt hat.

Fig. 5 zeigt ein Befestigungsteil 50 mit Laschen 51 und 52, die jeweils U-förmige Ausnehmungen 53 und 54 aufweisen. Ein Bolzen 55 ist in die Ausnehmungen 53 und 54 eingelegt. Die hier ebenfalls nicht gezeigte Feder drückt den Bolzen 55 im Betrieb in die U-förmigen Ausnehmungen 53 und 54. Der Bolzen 55 kann durch Verbiegen von Schenkeln 56 und 58 in die Ausnehmungen 53 und 54 eingeklemmt werden. Durch die Klemmung des Bolzens 55 wird dieser in den Ausnehmungen 53 und 54 gesichert. Außerdem vermeidet die Klemmung, dass sich der Bolzen 55 verdrehen kann und dadurch Quietschgeräusche erzeugt.

Ferner ist der Bolzen 55 mit einer Riffelung versehen, die ebenfalls ein Verdrehen des Bolzens 55 vermeiden hilft.

Die Bolzen 13, 23 und 55 sind gehärtet, um einem Verschleiß durch die daran angeordnete Feder vorzubeugen.

## Patentansprüche

1. Wischarm (10) einer Scheibenwischvorrichtung mit einem Befestigungsteil (12, 20, 50), wobei das Befestigungsteil (12, 20, 50) mit zwei Laschen (21, 22, 51, 52) zur Aufnahme eines Bolzens (13, 23, 55) versehen ist, wobei beide Laschen (51, 52) eine U-förmige Ausnehmung (53, 54) aufweisen, **dadurch gekennzeichnet, dass** der in den U-förmigen Ausnehmungen (53, 54) angeordnete Bolzen (55) geklemmt ist.

2. Wischarm (10) nach Anspruch 1, **dadurch gekennzeichnet, dass** mindestens eine der Laschen (21, 22, 51, 52) zum Inneren des Blechbefestigungsteiles (12, 20, 50) hin umgebogen ist.

3. Wischarm (10) nach Anspruch 1 oder 2, **dadurch gekennzeichnet, dass** der Bolzen (13, 23, 55) mit einer rauen Oberfläche versehen ist.

4. Wischarm nach einem der Ansprüche 1 bis 3, **dadurch gekennzeichnet, dass** der Bolzen (23) einen Kopf (24) aufweist.

5. Wischarm (10) nach einem der Ansprüche 1 bis 4, **dadurch gekennzeichnet, dass** die Laschen (21, 22, 51, 52) im Anbindungsbereich, in dem sie am Blechbefestigungsteil (12, 20, 50) angebunden sind, eine möglichst hohe Breite aufweisen.

6. Wischarm (10) nach einem der Ansprüche 1 bis 5, **dadurch gekennzeichnet, dass** der Bolzen (13, 23, 55) einen Durchmesser von 3 Millimetern hat.

7. Wischarm (10) nach einem der Ansprüche 1 bis 6, **dadurch gekennzeichnet, dass** der Bolzen (13, 23, 55) gehärtet ist.

8. Scheibenwischvorrichtung, insbesondere für ein Kraftfahrzeug, **dadurch gekennzeichnet, dass** sie den Wischarm (10) nach einem der Ansprüche 1 bis 7 aufweist.

## Claims

1. Wiper arm (10), of a windscreen wiper device with a fastening part (12, 20, 50), wherein the fastening part (12, 20, 50) is provided with two clips (21, 22, 51, 52) for receiving a bolt (13, 23, 55), wherein the two clips (51, 52) have a U-shaped recess (53, 54), **characterized in that** the bolt (55) which is arranged in the U-shaped recesses (53, 54) is clamped.

2. Wiper arm (10) according to Claim 1, **characterized in that** at least one of the clips (21, 22, 51, 52) is bent over towards the interior of the sheet-metal fastening part (12, 20, 50).

3. Wiper arm (10) according to Claim 1 or 2, **characterized in that** the bolt (13, 23, 55) is provided with a rough surface.

4. Wiper arm according to one of Claims 1 to 3, **characterized in that** the bolt (23) has a head (24).

5. Wiper arm (10) according to one of Claims 1 to 4, **characterized in that** the clips (21, 22, 51, 52) have as great a width as possible in the connecting region in which they are connected to the sheet-metal fastening part (12, 20, 50).

6. Wiper arm (10) according to one of Claims 1 to 5, **characterized in that** the bolt (13, 23, 55) has a diameter of 3 millimetres.

7. Wiper arm (10) according to one of Claims 1 to 6, **characterized in that** the bolt (13, 23, 55) is hardened.

8. Windscreen wiper device, in particular for a motor vehicle, **characterized in that** it has the wiper arm (10) according to one of Claims 1 to 7.

## Revendications

1. Bras d'essuie-glace (10) d'un dispositif d'essuie-glace, comprenant une partie de fixation (12, 20, 50), la partie de fixation (12, 20, 50) étant munie de deux pattes (21, 22, 51, 52) pour la réception d'une goupille (13, 23, 55), les deux pattes (51, 52) comprenant un évidement en forme de U (53, 54), **caractérisé en ce que** la goupille (55) disposée dans les évidements en forme de U (53, 54) est serrée.

2. Bras d'essuie-glace (10) selon la revendication 1, **caractérisé en ce qu'**au moins l'une des pattes (21, 22, 51, 52) est recourbée en direction de l'intérieur de la partie de fixation en tôle (12, 20, 50).

3. Bras d'essuie-glace (10) selon la revendication 1 ou 2, **caractérisé en ce que** la goupille (13, 23, 55) est munie d'une surface rugueuse.

4. Bras d'essuie-glace selon l'une quelconque des revendications 1 à 3, **caractérisé en ce que** la goupille (23) comprend une tête (24).

5. Bras d'essuie-glace (10) selon l'une quelconque des revendications 1 à 4, **caractérisé en ce que** les pattes (21, 22, 51, 52) présentent une largeur aussi grande que possible dans la région de connexion dans laquelle elles sont connectées à la partie de fixation en tôle (12, 20, 50).

6. Bras d'essuie-glace (10) selon l'une quelconque des revendications 1 à 5, **caractérisé en ce que** la goupille (13, 23, 55) a un diamètre de 3 millimètres.

7. Bras d'essuie-glace (10) selon l'une quelconque des revendications 1 à 6, **caractérisé en ce que** la goupille (13, 23, 55) est trempée.

8. Dispositif d'essuie-glace, en particulier pour un véhicule automobile, **caractérisé en ce qu'**il comprend le bras d'essuie-glace (10) selon l'une quelconque des revendications 1 à 7.
